# EUROPÄISCHE PATENTSCHRIFT

(11) **EP 2 146 204 B1**
(45) Veröffentlichungstag und Bekanntmachung des Hinweises auf die Patenterteilung: **23.02.2011**
(21) Anmeldenummer: 08012873.9
(22) Anmeldetag: 16.07.2008
(51) Int. Cl.: G01N 29/07, G01N 29/24, G01N 29/32, G01N 29/44

(54) **Verfahren und Vorrichtung zum Auswerten von Empfangssignalen einer zerstörungsfreien Ultraschallwellenprüfung an einem Prüfkörper**
Method and device for evaluating reception signals received from a nondestructive ultrasound test of a workpiece
Procédé et dispositif destiné à l'évaluation de signaux de réception obtenus lors d'une éxamination ultrasonore et nondestructive d'un échantillon

(43) Veröffentlichungstag der Anmeldung: 20.01.2010
(73) Patentinhaber: Fraunhofer-Gesellschaft zur Förderung der angewandten Forschung e.V., 80686 München (DE)
(72) Erfinder: Salzburger, Hans-Jürgen, Dr., 66539 Neunkirchen (DE); Niese, Frank, 66125 Saarbrücken (DE)
(74) Vertreter: Rösler, Uwe

(56) Entgegenhaltungen:
- DE-A1- 3 511 768
- DE-A1- 19 543 481
- DE-B3- 10 259 891

## Beschreibung

### Technisches Gebiet

Die Erfindung bezieht sich auf ein Verfahren zum Auswerten von Empfangssignalen, die bei einer zerstörungsfreien Ultraschallprüfung an einem Prüfkörper gewonnen werden. Bei der Ultraschallprüfung werden mit einem als Ultraschallsender dienenden elektromagnetischen Ultraschallwandler innerhalb des Prüfkörpers Ultraschallwellen erzeugt und mit einem als Ultraschallempfänger dienenden elektromagnetischen Ultraschallwandler sich innerhalb des Prüfkörpers ausbreitende Ultraschallwellen in Nutzsignale umgewandelt, die zur Prüfkörperuntersuchung ausgewertet werden. Ferner wird eine Vorrichtung für eine zerstörungsfreie Ultraschallwellenprüfung an einem Prüfkörper erläutert.

### Stand der Technik

Elektromagnetische Ultraschall-Prüfköpfe, kurz EMUS-Prüfköpfe, werden in an sich bekannter Weise zur zerstörungsfreien Untersuchung oder Vermessung von Prüfobjekten, die wenigstens elektrisch leitende und ferromagnetische Materialanteile besitzen, eingesetzt und vermögen koppelmittelfrei elastische Wellen innerhalb eines Prüfobjektes zu erzeugen sowie auch zu detektieren. Aus der Vielzahl unterschiedlicher Ausgestaltungsformen derartiger Prüfköpfe sei repräsentativ auf die DE 26 55 904 B2 sowie DE 195 43 481 C2 verwiesen.

Das den EMUS-Prüfköpfen zugrunde liegende Wirkprinzip basiert auf dem Vorsehen einer elektrischen Spule mit vorgegebener Geometrie und Windungszahl, die mit einem HF-Stromimpuls oder auch Burstsignal beaufschlagt wird, dessen Mittenfrequenz jener Frequenz von Ultraschallwellen entspricht, die in gewünschter Weise innerhalb des Prüfobjektes generiert werden sollen. So induziert der HF-Stromimpuls innerhalb der Skintiefe eines dicht zur elektrischen Spule befindlichen elektrischen leitfähigen, vorzugsweise homogenen Mediums elektrische Wirbelströme, deren flächige Verteilung innerhalb der Skintiefe spiegelbildlich zur Geometrie der Spulenfläche ist. Wird den innerhalb des Mediums induzierten Wirbelströmen ein statisches oder quasi statisches Magnetfeld überlagert, mit parallel zur Materialoberfläche oder senkrecht zu dieser orientierten Magnetfeldlinien, so werden innerhalb des Mediums räumliche und zeitlich periodische elastische Verschiebungen in Form elastischer Wellen im Frequenzbereich des Ultraschalls erzeugt, die sich innerhalb des Mediums entsprechend auszubreiten vermögen.

In umgekehrter Weise erzeugt eine am Ort der elektrischen Spule ankommende elastische Welle in Gegenwart eines stationären oder quasi stationären Magnetfeldes ein der Verschiebungsgeschwindigkeit sowie der magnetischen Induktion proportionales elektrisches Feld, wodurch in der Spule eine proportionale elektrische Spannung induziert wird. Diesen Mechanismus zur Erzeugung elektrischer Signale aus elastischen Wellen impulsen macht sich die Detektion der Ultraschallwellen unter Verwendung von EMUS-Prüfköpfen zu nutze. Jedoch liegen die Signalpegel der auf diese Weise generierten Spannungspulse im pV-Bereich, so dass es einer starken und rauscharmen Vorverstärkung bedarf um möglichst auswertbare Signalpegel zu erhalten. Desweiteren werden die vorverstärkten Signalpegel einer möglichst schmalbandigen elektrischen Filterung unterzogen, um das Signal/Rausch-Verhältnis zu verbessern.

Die hierbei eingesetzte Spule ist aufgrund ihrer elektrischen Induktivität jedoch auch in der Lage andere elektromagnetische Signale als jene zu empfangen, die wie vorstehend beschrieben, aus den elastischen Wellenimpulsen herrühren. Hinzukommt, dass die Impedanz der Spule möglichst hochohmig ausgeführt ist, um möglichst hohe Spannungssignalpegel zu generieren. Beide Gegebenheiten führen dazu, dass EMUS-Prüfköpfe außer von Ultraschallwellen herrührende Spannungssignale auch solche Signale zu detektieren in der Lage sind, die von extern induktiv einwirkenden elektromagnetischen Signalquellen herrühren. Diese durchlaufen die gleiche Verstärkungs- und gegebenenfalls Filterkette wie die Ultraschallsignale und können nicht ohne weiteres von den Ultraschallsignalen unterschieden werden.

Der DE 102 59 891 B3 ist eine elektromagnetische Ultraschallwandleranordnung zu entnehmen, die in einem Ausführungsbeispiel drei nebeneinander angeordnete EMUS-Wandler vorsieht, die jeweils zwei parallel verlaufende Flussleitstücke besitzen, die jeweils stirnseitig mit einem Ringbandkern verbunden sind, längs dessen bogenförmiger Erstreckung eine Spulenanordnung gewickelt ist. Zur Einprägung von SH-Transversalwellen innerhalb eines Werkstückes sind die Flussleitstücke zweier benachbart angeordneter EMUS-Wandler um eine halbe Schwingungswellenlänge der SH-Welle voneinander beabstandet.

Die DE 35 11 768 A1 beschreibt einen elektromagnetischen Wandler, der zur Abstrahlung bzw. Einkopplung von Ultraschallwellen in ein Werkstück eine Mehrfachanordnung einzelner stiftartig ausgebildeter Basiselemente aufweist, die jeweils mit einer Magnetisierungswicklung umgeben sind, wobei die stiftförmigen Basiselemente relativ zueinander derart angeordnet sind, dass je Wellenlänge noch mindestens zwei Basiselemente vorgesehen sind, selbst wenn man mit der höchsten Frequenz arbeitet. Dies bedeutet, dass die Wahl der Ultraschallwellenlänge auch derart vorgenommen werden kann, dass bei einem Einsatz größerer Ultraschallwellenlängen mehr als zwei, d. h. drei, vier und mehr derartiger Basiselemente angeordnet sind.

### Darstellung der Erfindung

Der Erfindung liegt die Aufgabe zugrunde ein Verfahren zum Auswerten von Empfangssignalen, die bei einer zerstörungsfreien Ultraschallprüfung an einem Prüfkörper gewonnen werden, bei der mit einem als Ultraschallsender dienenden elektromagnetischen Ultraschallwandler innerhalb des Prüfkörpers Ultraschallwellen erzeugt und mit einem als Ultraschallempfänger dienenden elektromagnetischen Ultraschallwandler sich innerhalb des Prüfkörpers ausbreitende Ultraschallwellen in Form von Nutzsignale umgewandelt werden, die zur Prüfkörperuntersuchung ausgewertet werden, dadurch weiterzubilden, dass es möglich sein soll Störsignale aus den detektierten Ultraschallempfangssignalen zu selektieren, so dass eine zuverlässige Auswertung ausschließlich auf Basis echter Ultraschallempfangssignale möglich wird. Gleichfalls gilt es eine entsprechende Vorrichtung anzugeben, mit der die vorstehend beschriebene Aufgabe lösbar ist.

Die Lösung der der Erfindung zugrunde liegenden Aufgabe ist im Anspruch 1 angegeben. Eine lösungsgemäße Vorrichtung ist Gegenstandes des Anspruches 6. Den lösungsgemäßen Erfindungsgedanken weiterbildende Merkmale sind Gegenstand der Unteransprüche sowie der weiteren Beschreibung insbesondere unter Bezugnahme auf die Ausführungsbeispiele zu entnehmen.

Das lösungsgemäße Verfahren zum Unterdrücken bzw. Eliminieren störender Empfangssignale, die seitens eines Empfangsprüfkopfes durch induktive Wechselwirkung aufgenommen werden, sieht den Einsatz von zwei elektromagnetischen Ultraschallempfängern vor, deren jeweils zugeordneten Empfangsspulen um jeweils eine halbe Wellenlänge der von dem Ultraschallsender in den Prüfkörper eingekoppelten Ultraschallwellen räumlich zueinander versetzt angeordnet sind. Die Empfangsspulen sind in ihren geometrischen und elektrischen Eigenschaften identisch ausgebildet und vermögen aufgrund induktiver Wechselwirkung jeweils unabhängige Spannungssignale zu generieren, die im Weiteren getrennt verarbeitet werden.

Die vorstehende Forderung bezüglich des Vorsehens zweier Ultraschallempfänger ist nicht notwendigerweise derart zu verstehen, dass zwei getrennte EMUS-Prüfköpfe in unmittelbarer räumlicher Nähe auf dem Prüfkörper anzuordnen sind, vielmehr werden die nachstehenden Ausführungen zeigen, dass es wesentlich darauf ankommt, dass zwei getrennte Empfangsspulen in der vorstehenden Weise eingesetzt werden, die nicht zuletzt aus Gründen einer einfachen technischen Realisierungsmöglichkeit in einem gemeinsamen Spulenträger integriert sind. Insofern werden in einem bevorzugten Ausführungsbeispiel zwei EMUS-Prüfköpfe in einer gemeinsamen Bauform integriert.

Die von jeder einzelnen Empfangsspule detektierten Empfangssignale gilt es zunächst einer Vorverstärkung und vorzugsweise einer Bandpassfilterung zu unterziehen, bevor die Empfangssignale im Wege einer Analog/Digitalwandlung in Form digitaler Ultraschallsignale umgesetzt und in Form zweier Datensätze abgespeichert werden.

In einem weiteren Verfahrensschritt werden zu den beiden Empfangssignalen zugehörige Phasen Φ1(t) und Φ2(t) berechnet. Die gewählte Schreibweise Φ1(t) und Φ2(t) soll zum Ausdruck bringen, dass zu jedem der in den beiden Datensätzen abgespeicherten Empfangssignale ein die jeweilige Phasenlage zu jedem Zeitpunkt t beschreibender Wert berechnet wird, d.h. Φ1(t) entspricht den Phasenlagen sämtlicher im ersten Datensatz abgespeicherten Empfangssignale und Φ2(t) den Phasenlagen sämtlicher im zweiten Datensatz abgespeicherten Empfangssignale.

Zur Berechnung der Phasen Φ1(t) und Φ2(t) ist ein gemeinsamer Phasenbezugspunkt erforderlich, zumal die weiterführender Signalauswertung die Phasenlagen der Empfangssignale beider Datensätze miteinander in Bezug setzen wird. Als gemeinsamer Phasenbezugspunkt wird vorzugsweise der Triggerzeitpunkt gewählt, mit dem die Analog/Digitalwandlung zeitlich initiiert wird. Alternativ bietet es sich an einzelne oder mehrere die Datenaufzeichnung der digitalisierten Empfangssignale miteinander synchronisierende Triggerzeitpunkte als Phasenbezugspunkte zu wählen.

Typischerweise erfolgt die Datenaufzeichnung der digitalisierten Empfangssignale, die jeweils von beiden Empfangsspulen herrühren, mit einer fest vorgegebenen Daten- oder Samplerate, beispielsweise 10 MHz. Die zeitliche Aufzeichnungsdauer, die letztlich die Tiefe festlegt, aus der Ultraschallsignale aus dem Prüfkörper gewonnen werden, wird in Abhängigkeit des jeweiligen Prüfkörpers und der gestellten Prüfaufgabe gewählt. Zudem gilt es in vorteilhafter Weise für sämtliche innerhalb der Aufzeichnungsdauer empfangenen Empfangssignale einen einheitlichen Phasenbezugpunkt zu wählen.

Im einem weiteren Verfahrensschritt werden für jeden einzelnen zeitlichen Samplepunkt der Phasenunterschied jeweils zeitsynchroner Empfangssignale aus beiden Datensätzen bestimmt, anhand dessen eine Selektion der Empfangssignale aus dem ersten und zweiten Datensatz von Empfangssignalen unter Maßgabe der nachstehenden Forderung durchgeführt wird:
Liegt der Phasenunterschied Φ(t) zweier in Betracht gezogener zeitsynchroner Empfangssignale im Intervall [180°-α⁻; 180° + α⁺] mit α⁻,α⁺ jeweils kleiner 15°, so erfolgt eine Selektion dieser Empfangssignale von allen übrigen Empfangssignalen. Eine weitere Auswertung der Empfangssignale erfolgt auf Grundlage der vorstehend selektierten Empfangssignale.

Das lösungsgemäße Verfahren beruht auf der Erkenntnis, dass sich von externen Signalquellen herrührende induktiv eingekoppelte Störsignale in beiden Empfangsspulen durch variierende Phasenlage zueinander auszeichnen, die zwischen 0° und 360° schwanken, jedoch einen Phasenunterschied von Φ(t) im Intervall [180°- α⁻; 180° + α⁺] nicht aufweisen, während die von Ultraschallsignalen herrührenden Nutzsignale aufgrund des örtlichen Versatzes der beiden Empfangspulen über die gesamte Signallänge einen Phasenunterschied Φ(t) im Intervall [180° - α⁻; 180° + α⁺] vorsehen. Das lösungsgemäße Verfahren bietet somit die Möglichkeit durch gezielte Auswertung der Phasenlagen der durch beide Empfangsspulen detektierten Empfangssignale Stör- und Ultraschallsignale voneinander zu trennen.

Zur einfachen Umsetzung des lösungsgemäßen Verfahrens dient eine Vorrichtung, die zwei als Ultraschallempfänger dienende elektromagnetische Ultraschallwellenwandler jeweils mit einer Empfangspule vorsieht, deren Spulengeometrie und Windungsanzahl identisch ausgebildet sind, wobei beide Spulenanordnungen um jeweils eine halbe Wellenlänge der von dem Ultraschallsender innerhalb des Prüfkörpers angeregten Ultraschallwellen zueinander räumlich versetzt angeordnet sind. Ferner ist eine Empfangssignalauswerteinheit vorgesehen ist, die die Empfangssignale beider Ultraschallempfänger in der vorstehende Weise auswertet.

Wie bereits vorstehend erwähnt, weisen beide Ultraschallempfänger in einer besonders bevorzugten Ausführungsform einen einheitlichen Spulenträger auf, an dem die Empfangsspulen beider Ultraschallempfänger aufgewickelt sind. Hierbei kann der Spulenträger aus einem dielektrischen oder aus einem metallischen Material bestehen.

Das lösungsgemäße Verfahren sowie eine hierfür geeignete Vorrichtung zur praktikablen Umsetzung des Verfahrens werden im Weiteren anhand konkreter Ausführungsbeispiele näher erläutert.

### Kurze Beschreibung der Erfindung

Die Erfindung wird nachstehend ohne Beschränkung des allgemeinen Erfindungsgedankens anhand von Ausführungsbeispielen unter Bezugnahme auf die Zeichnungen exemplarisch beschrieben. Es zeigen:
- Fig. 1: schematisierter Aufbau eines EMUS-Prüfkopfes mit zwei jeweils räumlich versetzt zueinander angeordneten Empfangsspulen,
- Fig. 2: Prüfdaten-Erfassung und Auswertesystem,
- Fig. 3: Diagrammdarstellung zur Illustration von Empfangssignalen an einem Testradsatz als Prüfkörper, sowie
- Fig. 4: vergrößerte Detaildarstellung einer in Figur 3 dargestellten Empfangs- sequenz.

### Wege zur Ausführung der Erfindung, gewerbliche Verwendbarkeit

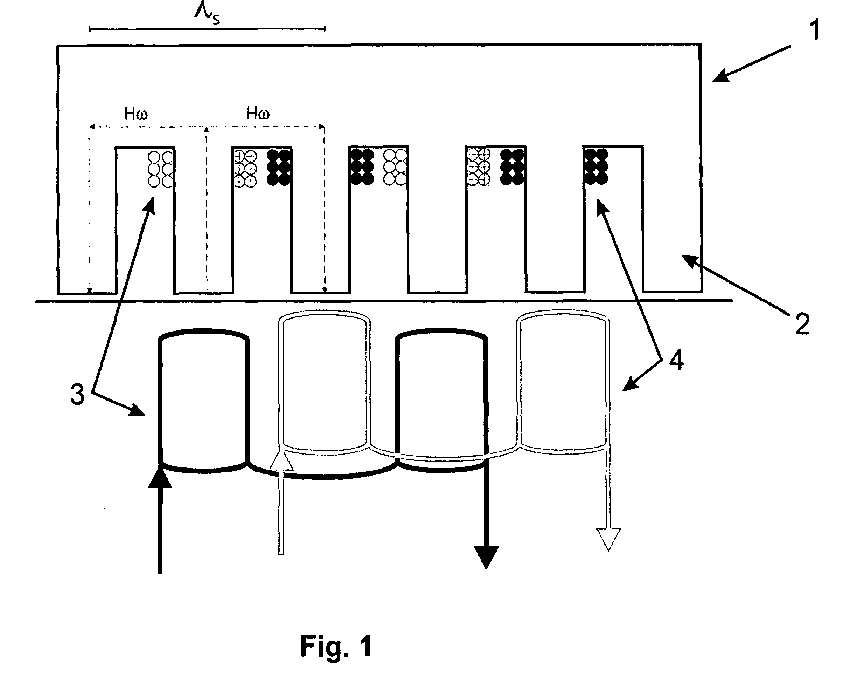

In Figur 1 ist ein EMUS-Prüfkopf in Seitenansicht als Schnittbild, oberes Bild, dargestellt, der einen kammartig ausgebildeten Spulenträger 1 aufweist, der aus einem dielektrischem oder aus einem metallischem Material bestehen kann und um dessen kammartig, einseitig offen endend ausgebildete Strukturen 2 zwei um jeweils die halbe Wellenlänge λₛ der jeweils aus einem Prüfkörper zu detektierenden Ultraschallwellen zueinander versetzt angeordnete Spulenwicklungen 3, 4 vorgesehen sind, die die stegartig ausgebildeten Strukturen 2 gemäß dem in Figur 1 untere Darstellung gezeigten Wicklungsplan umgeben. Mit Hilfe eines derartigen EMUS-Prüfkopfes können Ultraschallwellen aus einem nicht weiter dargestellten Prüfkörper detektiert werden, wobei die pro Empfangsspule 3, 4 empfangenen Empfangssignale getrennt voneinander erfasst und abgespeichert werden. Beide Empfangsspulen 3, 4 sind elektrisch und geometrisch identisch ausgebildet und weisen lediglich einen gegenseitigen räumlichen Abstand von 1/2λ bezogen auf die Ultraschallwellenlänge der zu detektierenden Ultraschallwellen auf.

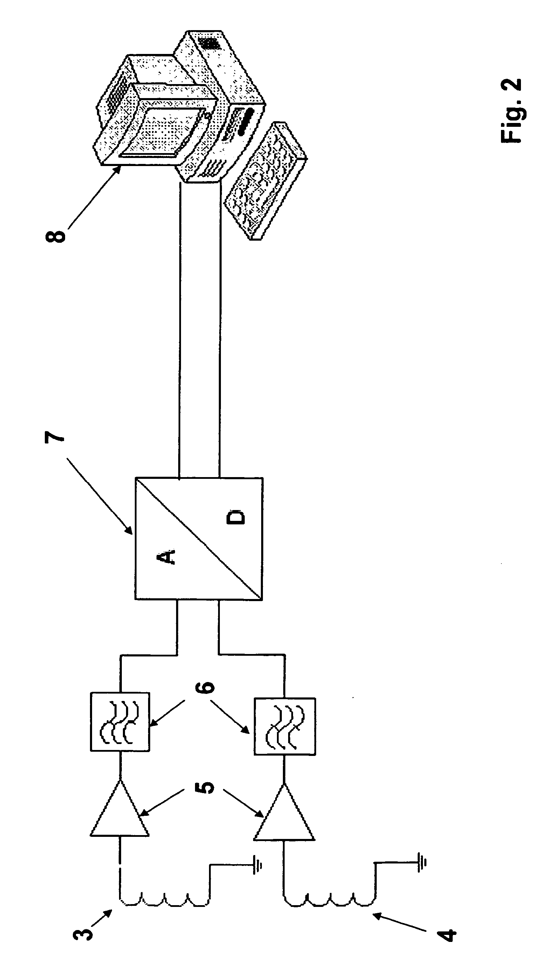

Zur Signalauswertung der mit Hilfe der beiden getrennten Empfangsspulen 3, 4 empfangenen Empfangssignale dient das in Figur 2 illustrierte Prüfdaten-Erfassungs- und Auswertesystem. So werden die Empfangssignale bezüglich der Empfangsspulen 3, 4 mit Hilfe jeweils eines Vorverstärkers 5 und einer nachfolgenden Bandpassfiltereinheit 6 vorverarbeitet und anschließend mit einer zweikanaligen Analog-Digitalwandlereinheit 7 in digitalisierte Empfangssignale umgewandelt und zur weiteren Auswertung einer Rechnereinheit 8 zugeleitet. Die in der Rechnereinheit 8 erfolgende Auswertung erfolgt im Wesentlichen in vier Verarbeitungsschritten:
- Zunächst erfolgt eine Berechnung der Phasenlage jedes einzelnen Empfangssignals zu jedem Zeitpunkt t zu einem geeignet gewählten Phasenlagenbezugspunkt, der, wie vorstehend erwähnt, vorzugsweise der Triggerzeitpunkt für die Analag-Digital-Umwandlung mit anschließender Abspeicherung der von beiden Empfangsspulen herrührenden Empfangssignale ist. Es entstehen somit zwei Datensätze von Empfangssignalen mit jeweils zugeordneten Phaseninformationen.
- In einem zweiten Schritt werden die Phasendifferenzen jeweils zeitsynchroner Empfangssignale aus beiden Datensätzen bestimmt.
- In einem dritten Schritt erfolgt eine Abfrage, ob die Phasendifferenz zeitsynchroner Empfangssignale innerhalb eines bestimmten Wertebereiches liegt, nämlich im Intervall [180° - α⁻; 180° + α⁺] mit α⁻, a⁺ jeweils kleiner 15°.
- Im vierten Schritt erfolgt eine Selektion der Empfangssignale dahingehend, dass ausschließlich Empfangssignale selektiert werden, die die vorstehende Bedingung erfüllen. Alle anderen Empfangssignale hingegen werden vorzugsweise zu Null gesetzt. Mit der letztgenannten Maßnahme werden sämtliche erfassten Empfangssignalabschnitte, die nicht das für Nutzsignale kennzeichnende Kriterium einer über mehrere Perioden konstanten Differenz der Signalphasen beider

Empfangssignale aufweisen, zu Null gesetzt und auf diese Weise ausgefiltert. Da der Selektionsalgorithmus unabhängig von Höhe sowie auch Unterschiede in den Amplituden der beiden Empfangssignalen ist, werden auch nicht kohärente Signale mit kleinen Signalpegeln ausgefiltert, wodurch das lösungsgemäße Konzept auch bei verrauschten Signalen mit geringen Signal-Rausch-Abstand angewendet werden kann. Der Filteralgorithmus lässt die Signalamplitude grundsätzlich unverändert, so dass die ausgefilterten Nutzsignale nach etablierten Kriterien der Amplitudenbewertung behandelt werden können.

Das in Figur 1 dargestellte Ausführungsbeispiel einer EMUS-Prüfkopfspulenanordnung lässt sich sowohl in einem senkrecht als auch in einem horizontal zur Werkstoff-Oberfläche eines Prüfkörpers orientierten Magnetfeld einsetzen und ist überdies zum Empfang von schräg aus dem Materialinneren auf die Oberfläche auftreffenden Ultraschallwellen, d.h. Transversalwellen mit vertikaler und horizontaler Polarisation, wie auch von an den Oberflächen sich ausbreitenden Ultraschallwellen, wie beispielsweise Rayleigh'schen Oberflächenwellen sowie horizontal polarisierte Transversalwellen anwendbar.

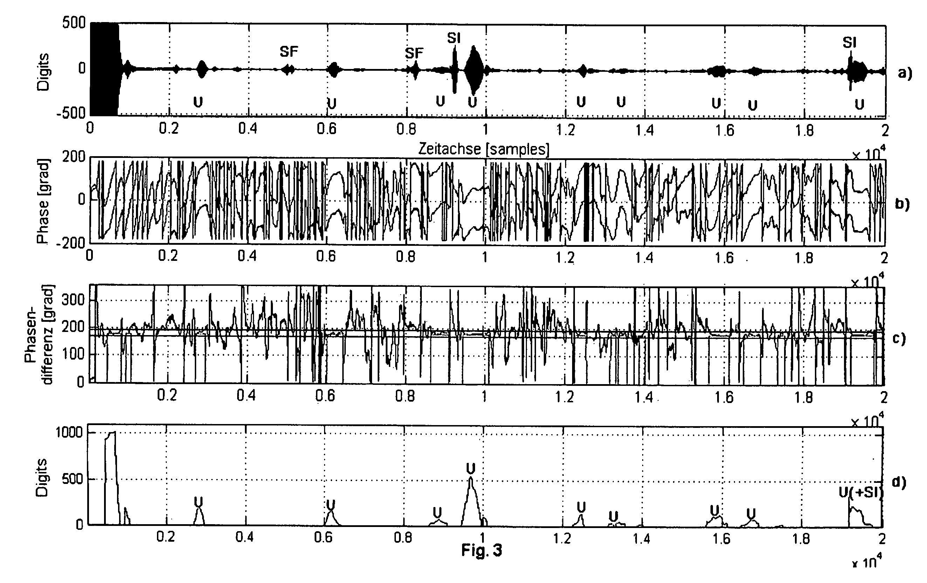

In Figur 3 ist eine Zusammenstellung von einzelnen, die Empfangssignale sowie daraus abgeleitete Empfangsgrößen repräsentierenden Diagrammen dargestellt, anhand derer das lösungsgemäße Verfahren erläutert werden soll. So stellt der in Figur 3 illustrierte A-Scan gemäß der obersten Diagrammdarstellung das Messergebnis einer statischen Messung an einem Radsatz dar, in dessen Lauffläche ein Testfehler in Form eines Sägeschnittes eingebracht ist. Zudem befinden sich zwei weitere reale Fehler in Form zweier von der Fahrkante ausgehende Anrisse innerhalb der Lauffläche. Die jeweils mit "U" gekennzeichneten Reflektionssignale rühren von Ultraschallsignalen her, die direkte oder Folge-Echos der zuvor beschriebenen tatsächlichen,Materialfehler darstellen. Die in dem A-Scan mit SF und SI gekennzeichneten Signale sind hingegen durch einen elektrischen Haar-Trockner und eine mit einem Spannungsimpuls beaufschlagt flachspiralige Spule in den Empfangsspulen als elektromagnetische Störimpulse bewusst induziert worden. Das oberste Diagramm a) stellt einen A-Scan dar, der die Empfangssignale über die Zeitachse darstellt, wobei längs der Zeitachse Samplepunkte von 0 bis 20000 aufgetragen sind. Längs der Zeitachse vorhandene lokale Amplitudenüberhöhungen markieren potentielle Reflexionsereignisse innerhalb eines Prüfkörpers, doch können diese auch von externen Signalquellen im Sinne von Störungen herrühren.

Die in dem A-Scan gemäß der obersten Diagrammdarstellung a) dargestellten Empfangssignale wurden mit Hilfe der beiden vorstehend erläuterten Empfangsspulen gemäß dem Ausführungsbeispiel in Figur 1 gewonnen und sind nach einer Vorverstärkung und Bandpassfilterung mit einer Samplerate von 10 MHz jeweils getrennt voneinander digitalisiert worden. Anhand des illustrierten A-Scans überlagern die Empfangssigriale beider Empfangsspulen und können anhand des oberen Diagramms optisch voneinander nicht unterschieden werden. Das unmittelbar unter dem oberen Diagramm gezeigte Diagramm b) illustriert die aus den digitalisierten Empfangssignalen beider Empfangskanäle rechnerisch ermittelte Phasenlagen, jeweils bezogen auf einen gemeinsamen Phasenbezugspunkt. Das Diagramm b) soll lediglich qualitativ zeigen, dass sich die Phasenlagen der Empfangssignale, die von den beiden Empfangsspulen herrühren, deutlich erkennbar durch zwei getrennte Funktionsverläufe, die in Diagramm b) längs der Zeitachse dargestellt sind, in Erscheinung treten.

Es zeigt sich, dass die Phasenlagen Φ₁(t), Φ₂(t) der jeweiligen Empfangssignale zwischen -180° und +180° liegen. Im von oben gezählten dritten Diagramm c) ist die ermittelte Phasendifferenz Φ(t) zwischen den Phasenlagen beider Empfangssignale angegeben, ebenfalls aufgetragen über die Zeitachse. Hierbei sind von besonderem Interesse all jene Empfangssignalanteile, deren Phasendifferenz Φ(t) innerhalb des Intervalls [180° - α⁻; 180° + α⁺] mit α⁻, α⁺ < 15° liegen, dies ist durch die beiden horizontal eingezeichneten Linien im Diagramm bildlich hervorgehoben. All jene Empfangssignalanteile, deren Phasendifferenz Φ(t) innerhalb des vorstehend bezeichneten Intervalls liegen, werden als Nutzsignale klassifiziert. Alle anderen Signalabschnitte, die dieses Kriterium nicht erfüllen, werden als Störsignale klassifiziert und zu Null gesetzt.

Das unterste Diagramm d) stellt die einhüllende aller Signalanteile dar, die das oben angegebene Kriterium eines Ultraschallnutzsignals erfüllen. Alle anderen Signalanteile werden zu Null gesetzt.

Nochmals soll Bezug genommen werden auf das obere Diagramm, das den A-Scan repräsentiert und Reflektionssignale zeigt, die mit U, SF sowie SI gekennzeichnet sind.

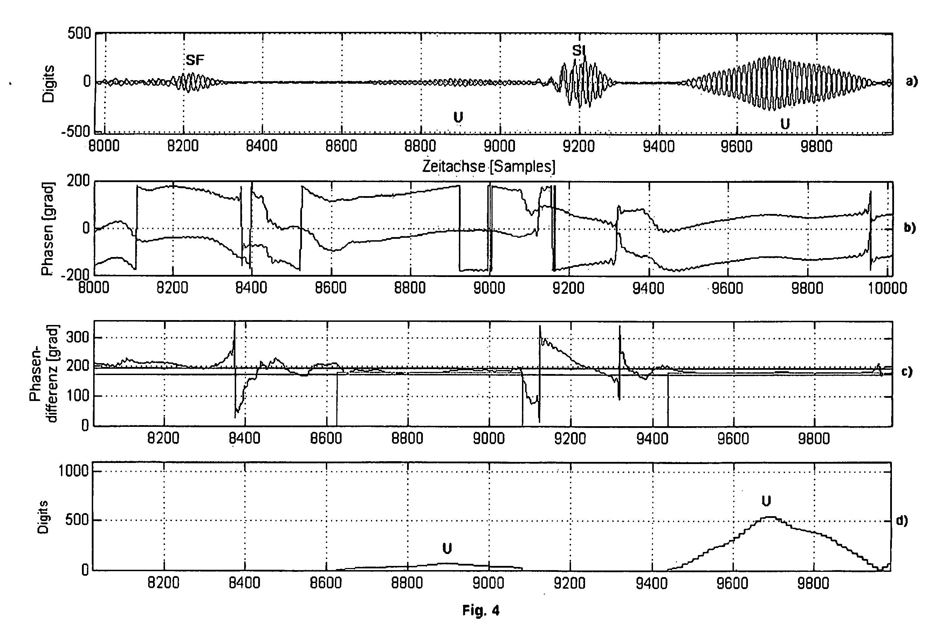

Anhand der Diagrammzusammenstellung in Figur 4, die lediglich eine skalierte Vergrößerung eines Ausschnittes der in Figur 3 gezeigten Diagramme zeigt, (siehe den durch die strichlierten Linien eingegrenzten Bereich in Figur 3) nämlich eine vergrößerte Darstellung aller Empfangssignale im Zeitbereich zwischen 8000 und 10000 Samplepunkten, kann unter Bezugnahme auf das zweite Diagramm b) von oben die Phasenverschiebung der von beiden Empfangsspulen herrührenden Empfangssignale entnommen werden. Die mit SF und SI gekennzeichneten Störsignale sind über eine ca. 6 bis 7 Perioden umfassende Signaldauer außer Phase und dies mit einer sich kontinuierlich ändernden Phasendifferenz. Hingegen ist die Phasendifferenz Φ(t) der mit U gekennzeichneten Ultraschallsignale relativ konstant gleich 180°.

Im darunter dargestellten Diagramm c) ist die berechnete Phasendifferenz Φ(t) der Empfangssignale gleichfalls vergrößert dargestellt. So zeigt sich, dass die Phasendifferenz Φ(t) in den mit x und y gekennzeichneten Bereichen konstant ca. 180° beträgt. Dies entspricht, wie vorstehend erwähnt, den tatsächlichen Nutzsignalen, die im untersten Diagramm d) als Einhüllende U dargestellt sind. In allen anderen Bereichen, in denen dieses Kriterium nicht erfüllt ist, werden die entsprechenden Störsignalanteile zu Null gesetzt. Dadurch erscheinen die Signale SF und SI nicht mehr im untersten Auswertediagramm.

### Bezugszeichenliste

- 1: Spulenträger
- 2: Kammartige Struktur
- 3: Empfangsspule
- 4: Empfangsspule

## Patentansprüche

1. Verfahren zum Auswerten von Empfangssignalen, die bei einer zerstörungsfreien Ultraschallprüfung an einem Prüfkörper gewonnen werden, bei der mit einem als Ultraschallsender dienenden elektromagnetischen Ultraschallwandler innerhalb des Prüfkörpers Ultraschallwellen erzeugt und mit einem als Ultraschallempfänger dienenden elektromagnetischen Ultraschallwandler sich innerhalb des Prüfkörpers ausbreitende Ultraschallwellen in Form auswertbarer Empfangssignale umgewandelt werden, die zur Prüfkörperuntersuchung ausgewertet werden,
**gekennzeichnet durch** die Kombination folgender Verfahrensschritte:
- Umwandeln der sich innerhalb des Prüfkörpers ausbreitenden Ultraschallwellen mit zwei um jeweils eine halbe Wellenlänge der von dem Ultraschallsender in den Prüfkörper eingekoppelten Ultraschallwellen räumlich zueinander versetzt angeordneten elektromagnetischen Ultraschallwandlerempfänger zum Erhalt eines ersten und eines zweiten Datensatzes von Empfangssignalen,
- Berechnen von Phasen Φ₁(t), Φ₂(t), die den Empfangssignalen beider Datensätze zuordenbar sind,
- Ermitteln eines Phasenunterschiedes Φ(t) = Φ₁(t)- Φ₂(t),
- Selektieren von Empfangssignalen aus dem ersten und zweiten Datensatz von Empfangssignalen, deren Phasenunterschied Φ(t) im Intervall [180° - Φ⁻ ; 180° + α⁺] mit α⁻, a⁺ < 15° liegen, und
- Auswerten der selektierten Empfangssignale.

2. Verfahren nach Anspruch 1,
**dadurch gekennzeichnet, dass** die pro Ultraschallempfänger erzeugten Empfangssignale jeweils vorverstärkt, digital umgewandelt und abgespeichert werden.

3. Verfahre nach Anspruch 1,
**dadurch gekennzeichnet, dass** die pro Ultraschallempfänger erzeugten Empfangssignale jeweils vorverstärkt, Bandpass gefiltert, digital umgewandelt und abgespeichert werden.

4. Verfahren nach einem der Ansprüche 2 bis 4,
**dadurch gekennzeichnet, dass** als Phasenbezugspunkt ein Triggerzeitpunkt verwendet wird, durch den die digitale Datenumwandlung ausgelöst wird.

5. Verfahren nach einem der Ansprüche 2 bis 4,
**dadurch gekennzeichnet, dass** die vorverstärkten und gegebenenfalls bandpassgefilterten Empfangssignale von beiden Ultraschallwandlerempfängem im Wege der digitalen Umwandlung mit einer vorgebbaren Samplerate und Sampletiefe digital umgewandelt und in Form von A-Scans als Datensatz, der jeweils einem Ultraschallwandler zuordenbar ist, abgespeichert werden.

6. Vorrichtung für eine zerstörungsfreie Ultraschallprüfung an einem Prüfkörper, mit einem als Ultraschallsender dienenden elektromagnetischen Ultraschallwandler und einem als Ultraschallempfänger dienenden elektromagnetischen Ultraschallwandler zur Umwandlung von sich innerhalb des Prüfkörpers ausbreitenden Ultraschallwellen in Empfangssignale,
**dadurch gekennzeichnet, dass** zwei als Ultraschallempfänger dienende elektromagnetische Ultraschallwellenwandler jeweils eine HF-Spulenanordnung (3, 4), deren Spulengeometrie und Windungsanzahl identisch sind, derart vorsehen, dass beide HF-Spulenanordnungen (3, 4) um jeweils eine halbe Wellenlänge der von dem Ultraschallsender innerhalb des Prüfkörpers angeregten Ultraschallwellen zueinander räumlich versetzt angeordnet sind, und
dass eine Empfangssignalauswerteinheit vorgesehen ist, die die Empfangssignale beider Ultraschallempfänger auswertet und für jeden Ultraschallempfänger einen Vorverstärker (5) und einen Analog/Digital Wandler (7) vorsieht zum Erhalt digitalisierter Zeitsignale der pro Ultraschallempfänger erhaltenen Empfangssignale,
dass eine Abspeichereinheit vorgesehen ist, die die Zeitsignale in Form von A-Scans jeweils als Datensatz pro Ultraschallempfänger abspeichert, und
dass eine Rechnereinheit (8) vorgesehen ist, die eine Auswertung beider A-Scans gemäß Verfahren nach einem der Ansprüche 1 bis 5 vornimmt.

7. Vorrichtung nach Anspruch 6,
**dadurch gekennzeichnet, dass** beide Ultraschallempfänger einen einheitlichen Spulenträger (1) aufweisen, an dem die HF-Spulen beider Ultraschallempfänger aufgewickelt sind.

8. Vorrichtung nach Anspruch 7,
**dadurch gekennzeichnet, dass** der Spulenträger (1) aus einem dielektrischen oder aus einem metallischen Material besteht.

9. Vorrichtung nach einem der Ansprüche 6 bis 8,
**dadurch gekennzeichnet, dass** der Spulenträger (1) eine kammartige, einseitig offene Struktur (2) aufweist, um die mäanderförmig beide HF-Spulen (3, 4) gewickelt sind.

## Claims

1. Method for evaluating received signals, which are obtained during a non-destructive ultrasonic examination of a test specimen, in which with an electromagnetic ultrasonic transducer serving as an ultrasonic transmitter, ultrasonic waves are produced within the test specimen and with an electromagnetic ultrasonic transducer serving as an ultrasonic receiver, ultrasonic waves propagated within the test specimen and in the form of evaluable received signals are converted, which are evaluated for test specimen analysis,
**characterized by** the combination of the following method steps:
- conversion of the ultrasonic waves propagated within the test specimen with two electromagnetic ultrasonic transducer receivers which are spatially offset from one another respectively by a half wavelength of the ultrasonic waves coupled by the ultrasonic transmitter in the test specimen for receipt of a first and a second data set of received signals,
- calculation of phases Φ₁ (t), Φ₂ (t), which are assignable with the received signals of both data sets,
- determination of a phase difference Φ(t)= Φ₁(t)-Φ₂(t),
- selection of received signals from the first and second data set of received signals, whose phase difference Φ(t) lies in intervals of [180° - α⁻; 10° + α⁺] with a⁻, α⁺< 15°, and
- evaluation of the selected received signals.

2. Method according to claim 1,
**characterized in that** the received signals produced per ultrasonic received, respectively, are preamplified, digitally converted and saved.

3. Method according to claim 1,
**characterized in that** the received signals produced per ultrasonic receiver, respectively, are preamplified, band-pass filtered, digitally converted, and saved.

4. Method according to one of claims 2 through 4,
**characterized in that** a trigger time point is used as the phase reference point, by means of which the digital data conversion is initiated.

5. Method according to one of claims 2 through 4,
**characterized in that** the preamplified and optionally band-pass filtered received signals of both ultrasonic transducer receivers of the digital conversion are digitally converted with a predetermined sample rate and sample depth and are saved in the form of A-scans as a data set, which is assignable respectively to an ultrasonic transducer.

6. Device for a non-destructive ultrasonic evaluation of a test specimen, with an electromagnetic ultrasonic transducer serving as an ultrasonic transmitter and an electromagnetic ultrasonic transducer serving as an ultrasonic receiver for conversion of ultrasonic waves propagated within the test specimen into received signals,
**characterized in that** two electromagnetic ultrasonic transducers serving as ultrasonic receivers, respectively, an HF-coil device (3, 4), whose coil geometries and winding counts are identical, are provided, such that both HF-coil devices (3, 4) are arranged spatially, respectively, offset to one another at a half wavelength of the ultrasonic waves produced by the ultrasonic transmitter within the test specimen, and
that a received signal evaluation unit is provided, which evaluates the received signals of both ultrasonic receivers and for each ultrasonic receiver of a preamplifier (5) and an analog/digital converter (7)provides for the receipt of digitalized time signals of the received signals obtained per ultrasonic receiver,
that a memory unit is provided, which stores the time signals in the form of A-scans, respectively, as a data set per ultrasonic receiver, and
that a computer unit (8) is provided, which performs an evaluation of both A-scans according to the method of one of claims 1 through 5.

7. Device according to claim 6,
**characterized in that** both ultrasonic receivers have a unitary coil carrier (1), on which the HF-coils of both ultrasonic receivers are wound.

8. Device according to claim 7,
**characterized in that** the coil carrier (1) comprises a dielectric or metallic material.

9. Device according to one of claims 6 through 8,
**characterized in that** the coil carrier (1) has a comb-shaped structure (2) open on one side, about which both HF-coils (3, 4) are wound in a meandering manner.

## Revendications

1. Procédé pour analyser des signaux de réception, qui sont obtenus lors d'un essai ultrasonore non destructif sur une éprouvette, lors duquel des ondes ultrasonores sont générées à l'intérieur de l'éprouvette avec un convertisseur d'ultrasons électromagnétique servant d'émetteur d'ultrasons et des ondes ultrasonores se propageant à l'intérieur de l'éprouvette sont converties sous forme de signaux de réception exploitables avec un convertisseur d'ultrasons électromagnétique servant de récepteur d'ultrasons, lesquels signaux sont analysés pour l'examen de l'éprouvette,
**caractérisé par** la combinaison des étapes de procédé suivante
- conversion des ondes ultrasonores se propageant à l'intérieur de l'éprouvette avec deux récepteurs convertisseurs d'ultrasons électromagnétiques, disposés de façon décalée dans l'espace l'un par rapport à l'autre de respectivement une demi-longueur d'onde des ondes ultrasonores injectées par l'émetteur d'ultrasons dans l'éprouvette, pour l'obtention d'un premier et d'un second ensembles de données de signaux de réception,
- calcul de phases Φ₁(t), Φ₂(t), qui peuvent être attribuées aux signaux de réception des deux ensembles de données,
- détermination d'une différence de phase Φ(t ) = Φ₁(t) - Φ₂(t),
- sélection de signaux de réception à partir du premier et du second ensembles de données de signaux de réception, dont la différence de phase Φ(t) se situe dans l'intervalle [180° - α⁻; 180° + α⁺] avec α⁻, α⁺ < 15°, et
- analyse des signaux de réception sélectionnés.

2. Procédé selon la revendication 1,
**caractérisé en ce que** les signaux de réception générés par récepteur d'ultrasons sont à chaque fois préamplifiés, convertis de façon numérique et stockés.

3. Procédé selon la revendication 1,
**caractérisé en ce que** les signaux de réception générés par récepteur d'ultrasons sont à chaque fois préamplifiés, filtrés dans le passe-bande, convertis de façon numérique et stockés.

4. Procédé selon l'une quelconque des revendications 2 à 4,
**caractérisé en ce qu'**un moment de déclenchement, par lequel la conversion numérique de données est déclenchée, est utilisé comme point de référence de phase.

5. Procédé selon l'une quelconque des revendications 2 à 4,
**caractérisé en ce que** les signaux de réception préamplifiés et éventuellement filtrés dans le passe-bande sont convertis par les deux récepteurs convertisseurs d'ultrasons par le moyen de la conversion numérique avec un taux d'échantillonnage et une profondeur d'échantillonnage prédéfinissables et sont stockés sous forme de A-Scans comme ensemble de données, qui peut être attribué à chaque fois à un convertisseur d'ultrasons.

6. Dispositif pour un essai ultrasonore non destructif sur une éprouvette, comprenant un convertisseur d'ultrasons électromagnétique servant d'émetteur d'ultrasons et un convertisseur d'ultrasons électromagnétique servant de récepteur d'ultrasons pour la conversion d'ondes ultrasonores se propageant à l'intérieur de l'éprouvette en signaux de réception,
**caractérisé en ce que** deux convertisseurs d'ondes ultrasonores électromagnétiques servant de récepteurs d'ultrasons prévoient à chaque fois un dispositif de bobine à haute fréquence (3, 4), dont la géométrie de bobine et le nombre de spires sont identiques, **en ce que** les deux dispositifs de bobine à haute fréquence (3, 4) sont disposés avec un décalage dans l'espace l'un par rapport à l'autre de respectivement une demi-longueur d'onde des ondes ultrasonores excitées par l'émetteur d'ultrasons à l'intérieur de l'éprouvette, et
**en ce qu'**il est prévu une unité d'analyse de signal de réception qui analyse les signaux de réception des deux récepteurs d'ultrasons et prévoit pour chaque récepteur d'ultrasons un préamplificateur (5) et un convertisseur analogique/numérique (7) pour obtenir des signaux de temps numérisés des signaux de réception reçus par récepteur d'ultrasons,
**en ce qu'**il est prévu une unité de stockage qui stocke les signaux de temps sous forme de A-Scans à chaque fois comme ,ensemble de données par récepteur d'ultrasons, et
**en ce qu'**il est prévu une unité d'ordinateur (8) qui effectue une analyse des deux A-Scans selon le procédé selon l'une quelconque des revendications 1 à 5.

7. Dispositif selon la revendication 6,
**caractérisé en ce que** les deux récepteurs d'ultrasons présentent un support de bobine (1) standard sur lequel les bobines à haute fréquence des deux récepteurs d'ultrasons sont enroulées.

8. Dispositif selon la revendication 7,
**caractérisé en ce que** le support de bobine (1) est à base d'un matériau diélectrique ou d'un matériau métallique.

9. Dispositif selon l'une quelconque des revendications 6 à 8,
**caractérisé en ce que** le support de bobine (1) présente une structure (2) en forme de peigne, ouverte d'un côté, autour de laquelle les deux bobines à haute fréquence (3, 4) sont enroulées en forme de méandre.
